# EUROPÄISCHE PATENTSCHRIFT

(11) **EP 2 668 406 B1**
(45) Veröffentlichungstag und Bekanntmachung des Hinweises auf die Patenterteilung: **12.08.2015**
(21) Anmeldenummer: 12700312.7
(22) Anmeldetag: 12.01.2012
(51) Int. Cl.: F16B 13/04

(54) **BEFESTIGUNGSELEMENT**
FIXING ELEMENT
ÉLÉMENT DE FIXATION

(30) Priorität: 24.01.2011 DE 102011000285
(43) Veröffentlichungstag der Anmeldung: 04.12.2013
(73) Patentinhaber: fischerwerke GmbH & Co. KG, 72178 Waldachtal (DE)
(72) Erfinder: BOHNET, Hartmut, 72178 Waldachtal (DE); KAUPP, Jochen, 72178 Waldachtal (DE); UNTERWEGER, Roland, 72285 Pfalzgrafenweiler (DE); HAAG, Mathias, 72221 Haiterbach (DE)
(86) Internationale Anmeldenummer: PCT/EP2012/000114
(87) Internationale Veröffentlichungsnummer: WO 2012/100911

(56) Entgegenhaltungen:
- DE-A1- 4 011 229

## Beschreibung

Die Erfindung betrifft ein Befestigungselement mit den Merkmalen des Oberbegriffs des Anspruchs 1.

Ein derartiges Befestigungselement zur Verankerung in einem Bohrloch ist aus der Offenlegungsschrift DE 40 11 229 A1 bekannt. Das in dieser Schrift dargestellte Befestigungselement ist insbesondere dazu geeignet, plattenartige Bauelemente, beispielsweise Naturwerksteinplatten, an einer lastabtragenden Konstruktion zu befestigen. Das Befestigungselement ist als Hinterschnittanker ausgebildet und weist einen Schaftabschnitt und ein Spreizelement auf. An dem Schaftabschnitt ist an seinem einbringseitig vorderen Ende ein sich im Durchmesser erweiternder Spreizkörper angeordnet, mit dem das Spreizelement aufspreizbar ist. Der Schaftabschnitt weist zudem an einem hinteren Teil ein Lastangriffsmittel auf. Das Spreizelement besteht aus einem Drahtring mit nach vorn, in Richtung des Spreizkörpers gebogenen bogenförmigen Spreizlappen mit zwei Stegen, die durch ein U-förmiges Joch am vorderen Ende verbunden sind. Das U-förmige Joch liegt in einem unverspreizten Zustand auf dem Spreizkörper auf. Am Schaftabschnitt des Befestigungselements ist zudem eine Spreizhülse angeordnet. Wird die Spreizhülse in Richtung des konischen Spreizkörpers in axialer Richtung entlang des Schaftabschnitts bewegt, so drückt die Spreizhülse das Spreizelement über den sich in Einbringrichtung erweiternden Spreizkörper, wodurch die Spreizlappen derart aufgespreizt werden, dass sie den Hinterschnitt eines Bohrlochs zumindest teilweise ausfüllen. Durch das Aufspreizen der Spreizlappen wird das Befestigungselement formschlüssig im Bohrloch verankert.

Zur Herstellung des Bohrlochs wird ein Bohrwerkzeug benutzt, das, abhängig vom Abnutzungsgrad, ein relativ weites oder enges Bohrloch erstellt. Bei einem relativ weiten Bohrloch kann es bei dem bekannten Befestigungselement vorkommen, dass das Spreizelement den Raum zwischen dem Spreizkörper und der Wand des Bohrlochs nicht vollständig überbrückt, so dass das Befestigungselement im Bohrloch keinen festen Sitz hat.

Aufgabe der Erfindung ist es daher, ein Befestigungselement zu schaffen, für das Toleranzen des Bohrwerkzeugs unkritisch sind.

Diese Aufgabe wird erfindungsgemäß durch ein Befestigungselement mit den Merkmalen des Anspruchs 1 gelöst. Das erfindungsgemäße Befestigungselement zur Verankerung in einem Bohrloch umfasst einen Schaftabschnitt und ein Spreizelement. An dem Schaftabschnitt ist ein Spreizkörper zum Spreizen des Spreizelements angeordnet. Der Schaftabschnitt ist insbesondere als Konusbolzen ausgebildet, mit einem konischen, insbesondere kegelstumpfartigen Spreizkörper, der sich in Einbringrichtung erweitert und an dem einbringseitig vorderen Ende des Schaftabschnitts angeordnet ist. Typischerweise weist der Schaftabschnitt zudem ein Lastangriffsmittel, beispielsweise ein Gewinde, auf. Das Spreizelement ist typischerweise hülsenförmig ausgebildet, wobei "hülsenförmig" bedeutet, dass das Spreizelement den Schaftabschnitt in Umfangsrichtung im Wesentlichen umschließt. Insbesondere ist das Spreizelement eine in Umfangsrichtung geschlossene Hülse. Mit "Einbringrichtung" bzw. "einbringseitig" ist die Richtung bzw. die Seite gemeint, in die bzw. mit der das Befestigungselement in ein Bohrloch eingeführt wird. Das Spreizelement weist mehrere bogenförmige Spreizlappen auf, wobei je ein Spreizlappen durch zwei Stege gebildet ist, die durch ein Joch verbunden sind. Insbesondere sind die Stege und das Joch eines Spreizlappens dünnwandig und/oder drahtförmig ausgebildet. Die Stege der Spreizlappen spannen gemeinsam eine Mantelfläche des Spreizelements auf, die rotationssymmetrisch zur Längsachse des Befestigungselements ist. Anders ausgedrückt liegen die Stege auf der Mantelfläche eines zur Längsachse rotationssymmetrischen Körpers, insbesondere eines Zylinders oder Kegels.

Kennzeichnend für das erfindungsgemäße Befestigungselement ist die spezielle Ausbildung des Jochs eines oder mehrerer der Spreizlappen. Erfindungsgemäß weist das Joch mindestens eines Spreizlappens eine Wölbung auf, die in radialer Richtung über die Mantelfläche übersteht. Hierdurch ist die radiale Ausdehnung des Jochs größer als die Materialdicke des Jochs in radialer Richtung, wodurch erreicht wird, dass ein Teil des Spreizlappens im Bereich des Jochs im verspreizten Zustand weiter in das Bohrloch ragt, in das das Befestigungselement eingebracht ist. Der Spreizlappen kann somit auch in einem relativ weiten Bohrloch den Raum zwischen der Bohrlochwand und dem Spreizkörper überbrücken, so dass das Befestigungselement im Bohrloch einen festen Sitz hat.

In einer bevorzugten Ausgestaltungsform des erfindungsgemäßen Befestigungselements bildet das Joch das vordere Ende des Spreizlappens. Somit entfernt sich das Joch beim Verspreizen des Spreizlappens am weitesten in radialer Richtung von der Längsachse des Ankers und wird am weitesten in Richtung Bohrlochwand bewegt. Vorzugsweise ist der Scheitel der bogenförmigen Wölbung radial nach außen, vom Spreizkörper weg gerichtet. Der Scheitel der Wölbung liegt dann als erster Teil des Jochs an einer Bohrlochwand an. Gegenüber einer Wölbung nach innen ergibt sich als Vorteil, dass die Verspreizkräfte geringer sind. Ebenfalls ist bevorzugt, dass sich die bogenförmige Wölbung im Wesentlichen in Umfangsrichtung erstreckt. Insbesondere verläuft die Wölbung einachsig und brückenförmig in Umfangrichtung. Erstreckt sich die bogenförmige Wölbung im Wesentlichen in Umfangsrichtung und ist der Scheitel radial nach außen gerichtet, so wirkt die Wölbung als Rauheitselement, in der Art eines Zahns oder einer Rippe, das die Reibung zwischen dem Spreizelement und der Bohrlochwand erhöht, indem es Unebenheiten der Bohrlochwand hintergreift.

In einer weiteren bevorzugten Ausgestaltungsform des erfindungsgemäßen Befestigungselements wirkt die Wölbung in radialer Richtung auf Grund ihrer geometrischen Ausgestaltung als Feder. Erstreckt sich die Wölbung beispielsweise im Wesentlichen brückenartig in eine Richtung, beispielsweise in Umfangsrichtung, so wirkt die Wölbung als Blattfeder. Dass die Wölbung in radialer Richtung als Feder wirkt, hat den Vorteil, dass sich das Joch beim Verspreizen an die Größe und Form des Bohrlochs anpassen kann. Wäre das Joch nur durch eine Materialverdickung oder massive Prägung an die Größe eines weiten Bohrlochs angepasst worden, so würde dies in einem engen Bohrloch zu zusätzlichen unerwünschten Spreizkräften führen, wenn das Befestigungselement vollständig verspreizt würde. Durch die geometrische Ausgestaltung der Wölbung als Feder ist die Anpassung mit relativ geringer Kraft möglich. Die Feder wird in einen engen Loch radial zusammengedrückt, ohne dass Spreizkräfte von nennenswerter Größe entstehen. Insbesondere dann, wenn das Joch einen geringen Querschnitt aufweist, beispielsweise wenn es drahtartig ausgebildet ist, ist die Wölbung relativ elastisch und leicht verformbar, so dass sie schon bei geringen Kräften in radialer Richtung als Feder wirkt.

In einer weiteren bevorzugten Ausgestaltungsform des erfindungsgemäßen Befestigungselements ist der Spreizlappen derart gestaltet, dass sich der Spreizlappen in Richtung seines freien Endes verjüngt. Insbesondere ist das die Stege verbindende Joch U- oder V-förmig und bildet das einbringseitig vordere Ende des Spreizlappens. Dies hat den Vorteil, dass der Spreizlappen beim Auftreffen auf die Bohrlochwand leichter verformt werden kann, wodurch Spannungen, die durch das Setzen des Befestigungselements in der Bohrlochwand entstehen können, insbesondere, wenn der Spreizlappen gegen den Bohrlochgrund gedrückt wird, reduziert werden.

Ebenfalls ist bevorzugt, dass das Spreizelement des erfindungsgemäßen Befestigungselements an seinem in Einbringrichtung hinteren Ende einen geschlossenen, ringförmigen Grundkörper aufweist, an dem einbringseitig die Spreizlappen angeordnet sind. Der geschlossene Grundkörper gewährleistet, dass das Spreizelement auch bei hohen Lasten nicht über den Spreizkörper gezogen wird und das Befestigungselement sicher verankert ist.

Vorzugsweise ist das Spreizelement des erfindungsgemäßen Befestigungselements ein Stanzteil, insbesondere ein Stanzbiegeteil, das aus Metall hergestellt ist. Dies ermöglicht eine einfache und kostengünstige Herstellung des Spreizelements und des erfindungsgemäßen Befestigungselements.

Die Erfindung wird nachfolgend anhand eines in der Zeichnung dargestellten Ausführungsbeispiels näher erläutert.

Es zeigen:

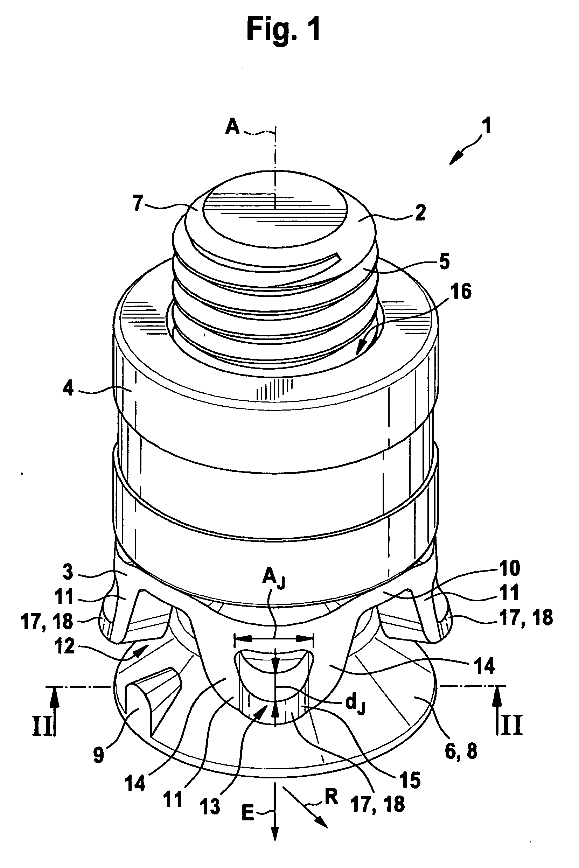

- Figur 1: ein erfindungsgemäßes Befestigungselement in einem unverspreizten Zustand in einer perspektivischen Ansicht; und

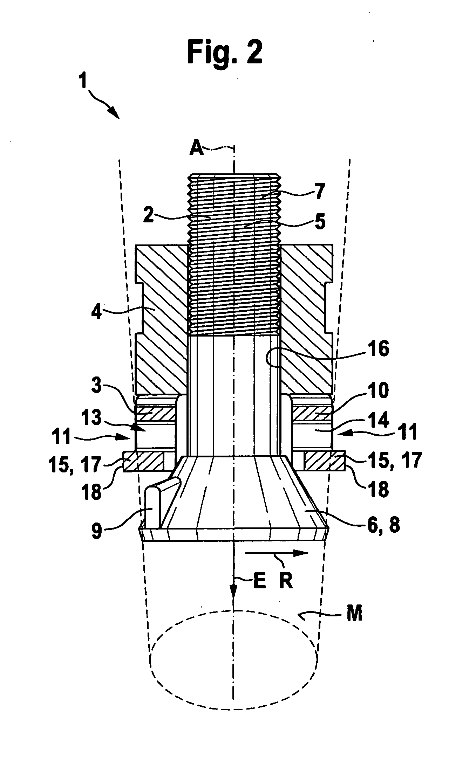

- Figur 2: eine teilweise geschnittene Darstellung des Befestigungselements.

Die Figuren zeigen ein erfindungsgemäßes Befestigungselement 1 in einem unverspreizten Zustand, so wie es in Richtung der Einbringrichtung E in ein nicht dargestelltes Bohrloch einführbar ist. Die Einbringrichtung E ist parallel zur Längsachse A des Befestigungselements 1. Das Befestigungselement 1 ist als Hinterschnittanker zur Verankerung in einem nicht dargestellten hinterschnittenen Bohrloch ausgebildet. Das Befestigungselement 1 besteht aus einem Schaftabschnitt 2, einem Spreizelement 3 und einer Spreizhülse 4.

Der Schaftabschnitt 2 ist ein Konusbolzen mit einem zylindrischen Abschnitt 5 und einem sich einbringseitig daran anschließenden konischen Abschnitt 6, dessen Durchmesser in Einbringrichtung E zunimmt. Der konische Abschnitt 6 bildet einen Spreizkörper 8, der als Kegelstumpf ausgeformt ist und der das vordere Ende des Schaftabschnitts 2 bildet. Durch den Spreizkörper 8 wird das Spreizelement 3 gespreizt, wenn es in Richtung der Einbringrichtung E auf den konischen Abschnitt 6 geschoben wird. Der zylindrische Abschnitt 5 weist ein Lastangriffsmittel 7 in Form eines Außengewindes auf. Das Lastangriffsmittel 7 dient beispielsweise zum Befestigen des Befestigungselements 1 an einer ebenfalls nicht dargestellten lastabtragenden Konstruktion.

Das Spreizelement 3 weist an seinem hinteren Ende einen ringförmigen Grundkörper 10 auf, der den zylindrischen Abschnitt 5 des Schaftabschnitts 2 als geschlossene Hülse ringförmig umfasst. Am Grundkörper 10 sind einbringseitig vier Spreizlappen 11 angeordnet, die durch Ausnehmungen 12 in Umfangsrichtung voneinander beabstandet sind. Die Spreizlappen 11 weisen jeweils eine Öffnung 13 in Form einer allseits umschlossenen Durchbrechung auf, die ungefähr mittig im jeweiligen Spreizlappen 11 angeordnet ist. Die Spreizlappen 11 sind somit bogenförmig, wobei ein Spreizlappen 11 durch zwei Stege 14 und ein U-förmiges Joch 15 gebildet ist, wobei das Joch 15 die beiden Stege 14 miteinander verbindet. Das Joch 15 bildet das vordere Ende des Spreizlappens 11, der sich auf Grund der U-förmigen Ausbildung des Jochs 15 in Richtung seines vorderen Endes verjüngt.

Die Stege 14 der Spreizlappen 11 spannen gemeinsam eine Mantelfläche M des Spreizelements 3 auf, die rotationssymmetrisch zur Längsachse A des Befestigungselements 1 und kegelförmig ist. Anders ausgedrückt liegen die Stege 14 auf der Mantelfläche M eines zur Längsachse rotationssymmetrischen Körpers. Das Joch 15 weist eine bogenförmige Wölbung 17 auf, die in radialer Richtung R über die Mantelfläche M übersteht und sich im Wesentlichen einachsig in Umfangsrichtung erstreckt. Der Scheitel 18 der Wölbung 17 weist in radialer Richtung R nach außen vom Spreizkörper 8 weg. Die nach außen abstehende Wölbung 17 wirkt in radialer Richtung als Blattfeder, die Toleranzen in der Weite des Bohrlochs ausgleichen kann. Im Bereich der Wölbung 17 ist die radiale Ausdehnung des Jochs 15 größer als die Materialdicke des Jochs 15, so dass der Scheitel 18 der Wölbung 17 auch bei einem relativ weiten Bohrloch an der Bohrlochwand anliegt. Ist das Bohrloch dagegen relativ eng, so wird die blattfederartige Wölbung 17 in radialer Richtung zusammengedrückt, so dass das Spreizelement 3 auch in einem engen Bohrloch planmäßig über den Spreizkörper 8 geschoben werden kann, ohne dass unerwünscht große Zwangskräfte im Material der Bohrlochwand entstehen. Insbesondere durch die drahtartige Ausgestaltung des Jochs 15 kann die Wölbung relativ leicht in radialer Richtung zusammengedrückt werden. "Drahtartig" meint hier, dass das Joch 15 einen Querschnitt aufweist, dessen Abmessungen bezogen auf die Ausdehnung des Jochs 15 in Umfangsrichtung relativ klein sind. Bei dem in den Figuren dargestellten erfindungsgemäßen Befestigungselement 1 beträgt das Verhältnis der Ausdehnung A_{J} des Jochs 15 in Umfangrichtung zur Materialdicke d_{J} des Jochs 15 in radialer Richtung R ungefähr 2,5/1.

Die Spreizhülse 4 ist als hohlzylindrischer Körper ausgebildet. Dabei weist der als zylindrische Bohrung 16 ausgebildete Hohlraum einen Innendurchmesser auf, der im Wesentlichen dem Außendurchmesser des zylindrischen Abschnitts 5 des Schaftabschnitts 2 entspricht. Wird die Spreizhülse 4 durch eine axiale Kraft, die beispielsweise durch ein nicht dargestelltes Einschlaggerät aufgebracht wird, in Richtung der Einbringrichtung E verschoben, so drückt die Spreizhülse 4 das Spreizelement 3 über den Spreizkörper 8, so dass die Spreizlappen 11 in radialer Richtung R verspreizt werden.

Damit bei einem in ein Bohrloch gesetzten und verspreizten Befestigungselement 1 eine nicht dargestellte Mutter auf das als Außengewinde ausgestaltete Lastangriffsmittel 7 aufgeschraubt werden kann, ohne dass das Befestigungselement 1 im Bohrloch mitdreht, weist das Befestigungselement 1 eine Verdrehsicherung auf. Als erster Teil der Verdrehsicherung dient eine nasenartigen Erhöhung 9 am konischen Abschnitt 6 des Spreizkörpers 8. Weitere Teile der Verdrehsicherung bilden die Ausnehmung 12 und ein Spreizlappen 11, an dem die nasenartige Erhöhung 9 in einem nicht dargestellten verspreizten Zustand anliegt. Die Verdrehsicherung überträgt ein durch eine Mutter aufgebrachtes Drehmoment über das gespreizte Spreizelement 3 durch Reibschluss auf die nicht dargestellte Bohrlochwand. Da das Spreizelement 3 des erfindungsgemäßen Befestigungselements 1 auf Grund der Wölbung 17 fest an der Bohrlochwand anliegt, wird ein Mitdrehen des Befestigungselements 1 im Bohrloch sicher verhindert.

Das Spreizelement 3 des Befestigungselements 1 ist als Stanzbiegeteil aus Metall gefertigt. Der Schaftabschnitt 2 besteht ebenfalls aus Metall und ist durch Kaltmassivumformung kostengünstig hergestellt. Die Spreizhülse 4 besteht dagegen aus einem faserverstärkten Kunststoff und ist im Spritzgussverfahren hergestellt. Das erfindungsgemäße Befestigungselement ist kostengünstig herstellbar und auf Grund seiner Ausgestaltung leistungsfähig und leicht zu montieren.

### Bezugszeichenliste

### Befestigungselement

- 1: Befestigungselement
- 2: Schaftabschnitt
- 3: Spreizelement
- 4: Spreizhülse
- 5: zylindrischer Abschnitt
- 6: konischer Abschnitt
- 7: Lastangriffsmittel
- 8: Spreizkörper
- 9: nasenartige Erhöhung
- 10: Grundkörper
- 11: Spreizlappen
- 12: Ausnehmung
- 13: Öffnung
- 14: Steg
- 15: Joch
- 16: Bohrung
- 17: Wölbung
- 18: Scheitel der Wölbung 17
- E: Einbringrichtung
- A: Längsachse
- R: radiale Richtung
- A_{J}: Ausdehnung des Jochs 15 in Umfangsrichtung
- d_{J}: Materialdicke des Jochs 15 in radialer Richtung R
- M: Mantelfläche

## Patentansprüche

1. Befestigungselement (1) zur Verankerung in einem Bohrloch,
- mit einem Schaftabschnitt (2) und einem Spreizelement (3),
- wobei an dem Schaftabschnitt (2) ein Spreizkörper (8) zum Spreizen des Spreizelements (3) angeordnet ist,
- wobei das Spreizelement (3) mehrere bogenförmige Spreizlappen (11) aufweist,
- wobei je ein Spreizlappen (11) durch zwei Stege (14) gebildet ist, die durch ein Joch (15) verbunden sind,
- wobei die Stege (14) der Spreizlappen (11) gemeinsam eine Mantelfläche (M) des Spreizelements (3) aufspannen, die rotationssymmetrisch zur Längsachse (A) des Befestigungselements (1) ist,
**dadurch gekennzeichnet,**
**dass** das Joch (15) mindestens eines Spreizlappens (11) eine bogenförmige Wölbung (17) aufweist, die in radialer Richtung (R) über die Mantelfläche (M) übersteht.

2. Befestigungselement nach Anspruch 1, **dadurch gekennzeichnet, dass** Joch (15) das vordere Ende des Spreizlappens (11) bildet.

3. Befestigungselement nach Anspruch 1 oder 2, **dadurch gekennzeichnet, dass** der Scheitel (18) der bogenförmigen Wölbung (17) radial nach außen, vom Spreizkörper (8) weg gerichtet ist.

4. Befestigungselement nach einem der Ansprüche 1 bis 3, **dadurch gekennzeichnet, dass** sich die bogenförmige Wölbung (17) im Wesentlichen in Umfangrichtung erstreckt.

5. Befestigungselement nach einem der Ansprüche 1 bis 4, **dadurch gekennzeichnet, dass** die bogenförmige Wölbung (17) in radialer Richtung (R) als Feder wirkt.

6. Befestigungselement nach einem der Ansprüche 1 bis 5, **dadurch gekennzeichnet, dass** der Spreizlappen (11) sich zu seinem vorderen Ende hin verjüngt.

7. Befestigungselement nach einem der Ansprüche 1 bis 6, **dadurch gekennzeichnet, dass** das Spreizelement (3) an seinem in Einbringrichtung (E) hinteren Ende einen geschlossenen Grundkörper (10) aufweist, an dem die Spreizlappen (11) angeordnet sind.

8. Befestigungselement nach einem der Ansprüche 1 bis 7, **dadurch gekennzeichnet, dass** das Spreizelement (3) ein Stanzteil, insbesondere ein Stanzbiegeteil ist.

## Claims

1. Fixing element (1) for anchoring in a drilled hole,
- having a shank portion (2) and an expansion element (3),
- there being arranged on the shank portion (2) an expander body (8) for expanding the expansion element (3),
- the expansion element (3) having a plurality of arcuate expansion lobes (11),
- each expansion lobe (11) being formed by two bridging portions (14) connected by a yoke (15),
- the bridging portions (14) of the expansion lobes (11) together generating an envelope surface (M) of the expansion element (3), which envelope surface (M) has rotational symmetry about the longitudinal axis (A) of the fixing element (1),
**characterised in that**
the yoke (15) of at least one expansion lobe (11) has an arcuate curvature (17), which projects beyond the envelope surface (M) in the radial direction (R).

2. Fixing element according to claim 1, **characterised in that** the yoke (15) forms the front end of the expansion lobe (11).

3. Fixing element according to claim 1 or 2, **characterised in that** the crown (18) of the arcuate curvature (17) faces radially outwards, away from the expander body (8).

4. Fixing element according to one of claims 1 to 3, **characterised in that** the arcuate curvature (17) extends substantially in the circumferential direction.

5. Fixing element according to one of claims 1 to 4, **characterised in that** the arcuate curvature (17) acts as a spring in the radial direction (R).

6. Fixing element according to one of claims 1 to 5, **characterised in that** the expansion lobe (11) becomes narrower towards its front end.

7. Fixing element according to one of claims 1 to 6, **characterised in that** the expansion element (3) has, at its rear end in the direction of introduction (E), a continuous basic body (10), on which the expansion lobes (11) are arranged.

8. Fixing element according to one of claims 1 to 7, **characterised in that** the expansion element (3) is a stamped part, especially a stamped and bent part.

## Revendications

1. Elément de fixation (1) destiné à l'ancrage dans un trou foré,
- comprenant une zone formant tige (2) et un élément déployable (3),
- un corps d'écartement (8) étant disposé sur ladite zone formant tige (2), en vue d'écarter ledit élément déployable (3),
- ledit élément déployable (3) comportant plusieurs pattes expansibles (11) en arc de cercle,
- chacune desdites pattes expansibles (11) étant formée de deux membrures (14) reliées par un étrier (15),
- les membrures (14) des pattes expansibles (11) couvrant, conjointement, l'étendue d'une surface d'enveloppe (M) de l'élément déployable (3) qui présente une symétrie de rotation par rapport à l'axe longitudinal (A) de l'élément de fixation (1),
**caractérisé par le fait**
**que** l'étrier (15) d'au moins une patte expansible (11) offre un bombement (17) en arc de cercle qui fait saillie, dans le sens radial (R), au-delà de la surface d'enveloppe (M).

2. Elément de fixation selon la revendication 1, **caractérisé par le fait que** l'étrier (15) matérialise l'extrémité antérieure de la patte expansible (11).

3. Elément de fixation selon la revendication 1 ou 2, **caractérisé par le fait que** le sommet (18) du bombement (17) en arc de cercle est dirigé vers l'extérieur, dans le sens radial, en s'éloignant du corps d'écartement (8).

4. Elément de fixation selon l'une des revendications 1 à 3, **caractérisé par le fait que** le bombement (17) en arc de cercle s'étend, pour l'essentiel, dans la direction périphérique.

5. Elément de fixation selon l'une des revendications 1 à 4, **caractérisé par le fait que** le bombement (17) en arc de cercle agit comme un ressort dans le sens radial (R).

6. Elément de fixation selon l'une des revendications 1 à 5, **caractérisé par le fait que** la patte expansible (11) s'amenuise en direction de son extrémité antérieure.

7. Elément de fixation selon l'une des revendications 1 à 6, **caractérisé par le fait que** l'élément déployable (3) présente, à son extrémité située à l'arrière dans la direction d'insertion (E), un corps d'embase fermé (10) sur lequel les pattes expansibles (11) sont disposées.

8. Elément de fixation selon l'une des revendications 1 à 7, **caractérisé par le fait que** l'élément déployable (3) est une pièce venue de découpage, notamment une pièce découpée pliée.
